(19) **Europäisches Patentamt**

**European Patent Office**

**Office européen des brevets**

(11) **EP 0 557 529 B1**

(12) **EUROPEAN PATENT SPECIFICATION**

(45) Date of publication and mention
of the grant of the patent:
**02.01.1997 Bulletin 1997/01**

(51) Int Cl.$^6$: **G01F 1/60**, G01F 1/58,
G01F 1/00

(21) Application number: **92918706.0**

(22) Date of filing: **03.09.1992**

(86) International application number:
**PCT/JP92/01123**

(87) International publication number:
**WO 93/05367 (18.03.1993 Gazette 1993/08)**

(54) **ELECTROMAGNETIC FLOWMETER FOR WATER CONVEYANCE IN SEMIFULL STATE**

MAGNETISCH INDUKTIVER FREISPIEGELDURCHFLUSSMESSER

DEBITMETRE ELECTROMAGNETIQUE POUR CONDUITES D'EAU PARTIELLEMENT REMPLIES

(84) Designated Contracting States:
**CH DE FR GB LI**

(30) Priority: **03.09.1991 JP 222939/91**

(43) Date of publication of application:
**01.09.1993 Bulletin 1993/35**

(60) Divisional application: **95109819.395116484.7**

(73) Proprietor: **Aichi Tokei Denki Co., Ltd.
Nagoya-shi Aichi-Ken 456-91 (JP)**

(72) Inventor: **YOSHIDA, Yutaka,
Room 604, Fuji Haitsu
Kaniecho, Ama-gun, Aichi 497 (JP)**

(74) Representative:
**Blanco White, Henry Nicholas et al
ABEL & IMRAY
Northumberland House
303-306 High Holborn
London WC1V 7LH (GB)**

(56) References cited:
EP-A- 0 336 615          JP-A- 5 223 605
JP-A-63 006 420          JP-U-62 114 317
US-A- 3 991 612

• PATENT ABSTRACTS OF JAPAN vol. 14, no. 76
(P-1005) 13 February 1990 ; & JP-A-12 092 214
• PATENT ABSTRACTS OF JAPAN vol. 9, no. 109
(P-355) 14 May 1985 ; & JP-A-59 230 115
• PATENT ABSTRACTS OF JAPAN vol. 12, no. 303
(P-746) 19 September 1986 ; & JP-A-63 075 620

## Description

The present invention relates to an electromagnetic flowmeter for an incompletely filled fluid flow conduit.

There is known an apparatus which includes coils disposed above and below a flow conduit for detecting on the basis of the outputs of the coils whether the flow conduit is completely filled or unfilled, i.e., not completely but only partially filled, with a fluid (JP-A-59-230115).

Further, an arrangement in which the coils disposed above and hel.ow a flow conduit are connected in series to each other is disclosed in JP-A-52-48356.

The applicant has already proposed a flow rate measuring method for measuring a flow rate of a fluid flowing through a flow conduit in the unfilled state thereof on the basis of the principle underlying an electromagnetic flowmeter and a flow rate detector used in carrying out the aforementioned method (Unpublished Japanese Patent Application HEI-3-5631 filed January 22, 1991). This proposal was published in JP-A 5-223605, which was not published until after the priority date of the present application.

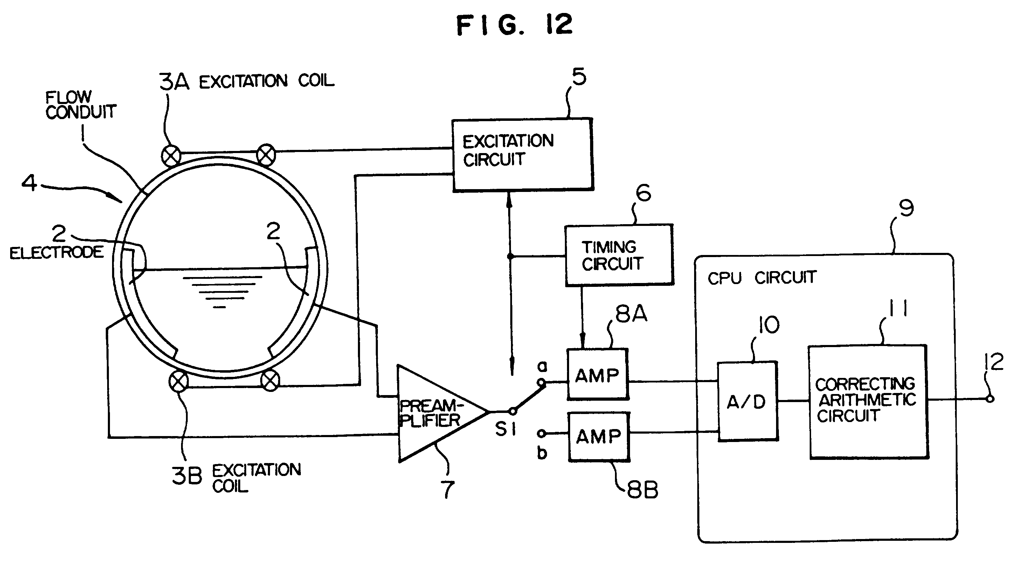

The flow detecting method and the flow detector mentioned above will be elucidated by reference to Figures 12 to 20.

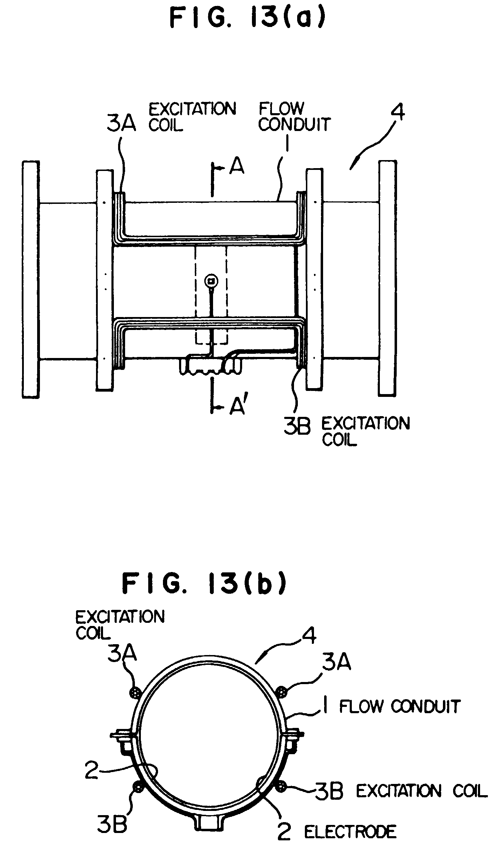

In Figures 12 and 13, a numeral 1 denotes a flow conduit having a circular cross-section, 2; 2 denote a pair of electrodes disposed at positions symmetrical to a vertical line extending through the center of the flow conduit 1, and 3A and 3B denote first and second excitation coils for generating magnetic flux density distributions BA and BB differing from each other for different periods (or times). A reference symbol 4 designates generally a flow rate detector of the illustrated structure.

A numeral 5 denotes an excitation circuit which responds to a signal outputted from a timing circuit 6 to excite the first and second excitation coils 3A and 3B alternately with each other. A numeral 7 denotes a preamplifier for amplifying a voltage making appearance across the electrodes 2;2, a symbol $S_1$ denotes a change-over switch which operates in response to the signal supplied from the timing circuit 6 to change over the paired excitation coils 3A and 3B mentioned above in synchronism with the change-over of the aforementioned excitation periods. More specifically, the switch $S_1$ is changed-over to a contact $\underline{a}$ when the first excitation coil 3A is excited, while being changed over to a contact $\underline{b}$ when the second excitation coil 3B is excited.

Reference symbols 8A and 8B denote amplifiers which are supplied with signals via the contact $\underline{a}$ and the contact $\underline{b}$, respectively, and serve for an offset compensation and a sample and hold function of these signals, a numeral 9 denotes a CPU circuit, a numeral 10 denotes an A/D conversion circuit for converting the analogue signals supplied from the amplifiers 8A; 8B to digital signals, and a numeral 11 denotes an arithmetic circuit incorporating a program for performing arithmetic operations which will be described later on. A reference numeral 12 denotes an output terminal for outputting a flow rate signal generated as a result of the arithmetic operation.

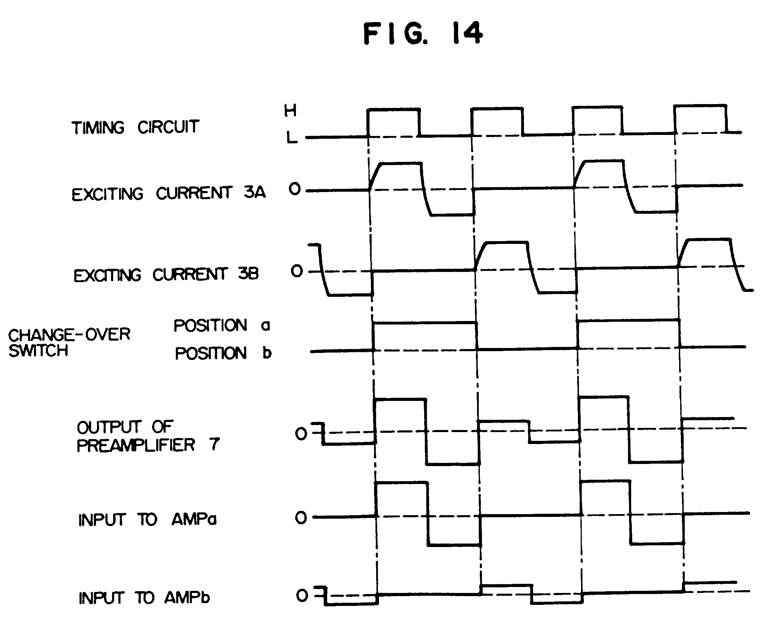

Figure 14 is a timing chart for illustrating operation of the electromagnetic flowmeter of the structure shown in Figure 12 and shows from the top of the figure an output signal of the timing circuit 5, an exciting current for the first excitation coil 3A, an exciting current for the second excitation coil 3B, operation of the change-over switch $S_1$, an output signal of the preamplifier 7, an input signal to the amplification circuit 8A and an input signal to the amplification circuit 8B, respectively, in this order.

For measuring a flow rate of a fluid flowing through the flow conduit 1 in an unfilled state, such a procedure is adopted which is described below.

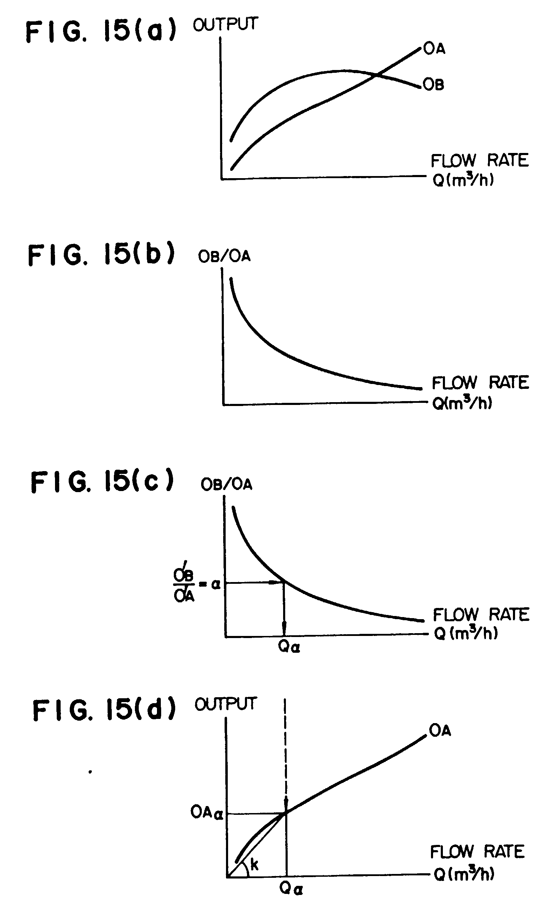

Step 1. A flow conduit having the same cross-shape as the flow conduit 1 for which the flow rate is to be measured is provided. By changing a fluid level $\underline{h}$ within the first mentioned flow conduit while maintaining constant the slope thereof, output signals OA and OB corresponding to flow rates Q at the above-mentioned fluid levels are previously determined. In one and the same flow conduit, the fluid level and the flow rate bear a one-to-one correspondence relation to each other. Parenthetically, the output signals OA and OB represent flow rate signals generated by the first and second excitation coils 3A and 3B, respectively, when a same flow rate Q is measured by using the flow rate detector 4 operating in accordance with the principle underlying the electromagnetic flowmeter (Fig 15(a)).

Step 2. Unknown flow rate Q' in the flow conduit 1 through which a fluid whose flow rate is to be measured is flowing is measured by means of the aforementioned flow detector 4 to obtain output data OA' and OB'.

Step 3. A ratio OB'/OA' between the outputs OB' and OA' are determined, and then a flow rate $Q\alpha$ for which a ratio OB/OA between the outputs OB and OA determined in the step 1 assumes a same value as the ratio OB'/OA' is retrieved from the data obtained in the step 1 (Figure 15(b)(c)), whereon a sensitivity given by $OA\alpha/Q\alpha$ in the state where the flow rate in the step 1 is $Q\alpha$ is arithmetically determined from the output data $OA\alpha$ acquired in the step 1 when the flow rate is $Q\alpha$ (Figure 15(d)).

Step 4. On the basis of the output OA' measured in the step 2 and the sensitivity $OA\alpha/Q\alpha$ determined in the step 3, the unknown flow rate Q' is arithmetically determined in accordance with the following expression:

$$Q' = OA' . Q\alpha / OA\alpha$$

As will now be appreciated, there has been proposed a method of determining an unknown flow rate Q' without need for detecting the fluid level.

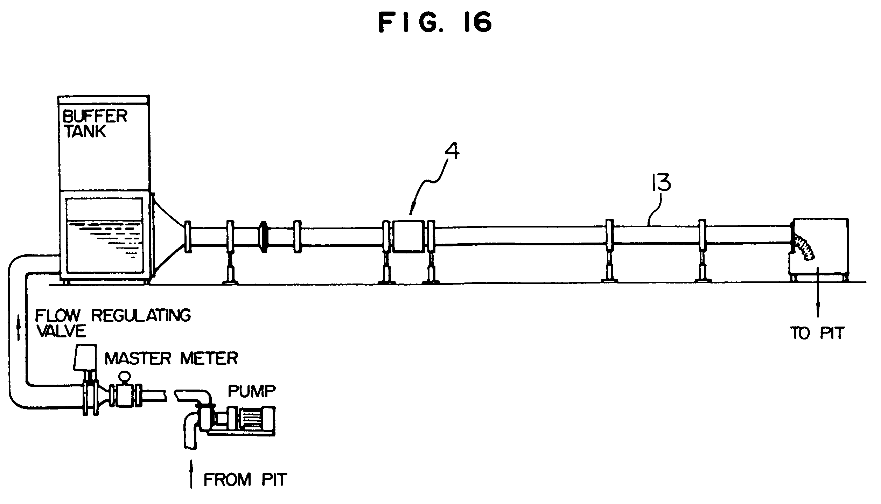

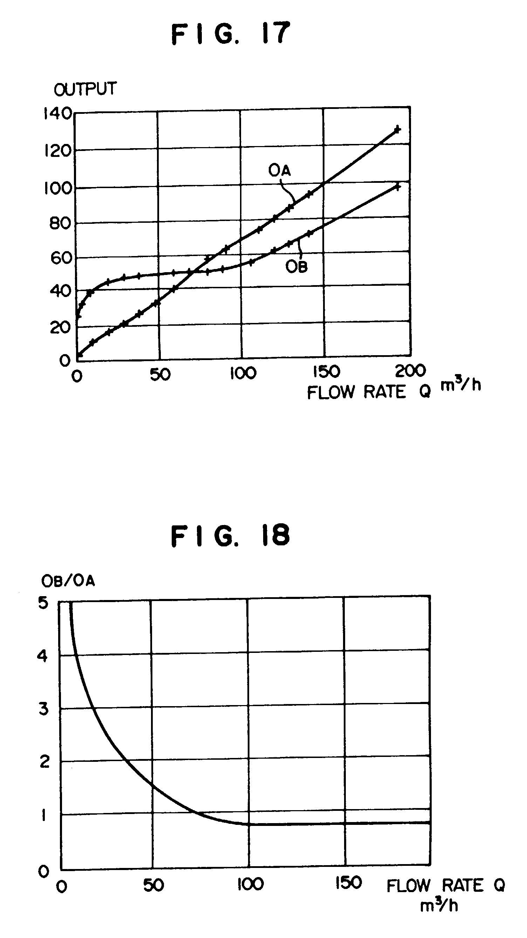

Figure 16 shows a general arrangement of an apparatus employed in the experiments for verifying the measurement accuracy afforded by the above-mentioned measuring method, wherein the flow rate detector 4 described above by reference to Figures 12 and 13 is mounted on a pipe 13 made of vinyl chloride and having an inner diameter of 200 mm and a length of about 8 m. A slope of this vinyl chloride pipe was first set fixedly at 2/1000, and an actual flow rate Q was measured by using the first excitation coil 3A. A relation between this actual flow rate Q and the output OA of the electromagnetic flowmeter is represented by a curve OA in Figure 17. On the other hand, a curve OB represents result of the measurement carried out by using the second excitation coil 3B in the same slope of the pipe.

Ratios OB/OA determined from both data OA and OB shown in Figure 17 are shown in Figure 18. In this figure, the ratio OB/OA remains constant at a minimum value when the flow rate exceeds a value of approximately 100 [m$^3$/hour]. This range represents a so-called completely filled state. In Figure 17, the curves OA and OB constitute line segments of straight lines extending through the origin of the coordinate system in a range where the flow rate Q is greater than about 100 [m$^3$/hour]. As can readily be understood, the above-mentioned range indicates a range in which the electromagnetic flowmeter operates as a so-called conventional full-fluid type electromagnetic flowmeter.

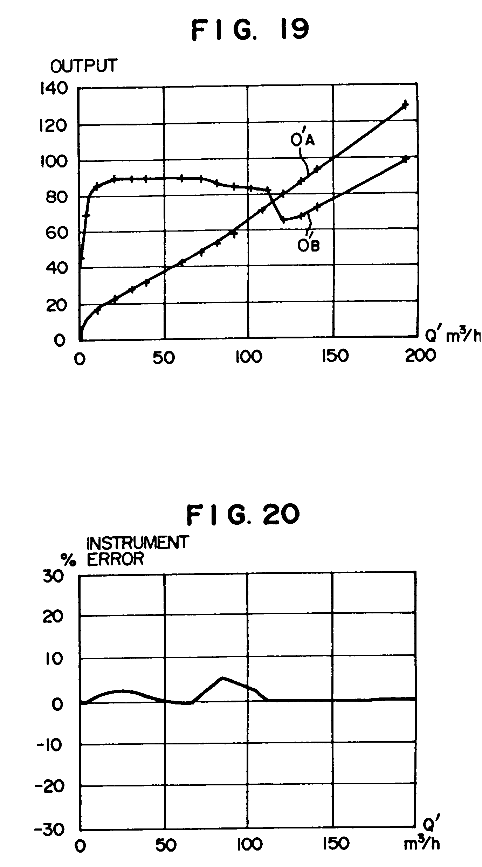

Figure 19 shows relations between an actual flow rate Q' [m$^3$/hour] measured by using the apparatus shown in Figure 16 and by changing the slope of the flow conduit 13 to 6/1000 and the outputs OA' and OB' obtained by exciting the excitation coils 3A and 3B, respectively. In this experiment, the actual flow shown in Figure 19 is known. However, assuming that the actual flow rate Q' [m$^3$/hour] is unknown, the ratio OB'/OA' = α is determined, which is then followed by determination of the actual flow rate Qα at a point where value of α coincides with the value of OB/OA in Figure 18. By arithmetically determining the sensitivity OAα/Qα at the flow rate Qα on the basis of the curve OA shown in Figure 17, the unknown flow rate Q' can be determined in accordance with the arithmetic method mentioned previously as follows:

$$Q' = 0A' \cdot Q\alpha / OA\alpha$$

In this method, instrumentation-ascribable errors were determined at several values of the flow rate Q'. The errors were of relatively small values, as shown in Figure 20. The practicality of this measuring method could thus be verified.

The flow rate measuring method elucidated in the foregoing suffers from a problem that the measurement is accompanied with errors dependent on the conductivity of the fluid to be measured because symmetry is likely to be lost in the positional relationship between the electrodes of the flow rate detector 4 as used and the ground as well as in the relation between the electrode profile and the exciting magnetic flux density. distribution.

EP-A 0 336 615 discloses an electromagnetic flowmeter with a single coil in which one electrode is intermittently connected to a reference voltage and the current flowing between the reference voltage and the earthed measuring conduit enables the conductivity of the fluid to be measured.

Accordingly, it is an object of the present invention to provide an electromagnetic flowmeter for an unfilled fluid flow conduit which can solve the problems mentioned above.

The invention provides an electromagnetic flowmeter for measuring flow rate of a fluid not completely filling a conduit, comprising:

coils mounted adjacent to the upper and lower sides of the conduit for generating a magnetic field across the conduit;

a pair of electrodes arranged to sense the induced voltage across the conduit caused by the passage of the fluid through the magnetic field;

and a processing circuit including respective shunt switches connected between the output leads from the electrodes and ground; said processing circuit also comprising means arranged:

to determine the ratio **p** between the output voltage Eu when the upper coil is energised and the said shunt switches are open and the output voltage El when the lower coil is energised and the said shunt switches are open;

to determine the ratio **s** between the said output voltage Eu and the output voltage Eu' when the upper coil is energised and the said shunt switches are closed;

to store reference relationships between the ratio **g** of flow rate Q to the output voltage Eu or El and fluid level **h** and conductivity **c**;

to determine values of the fluid level **h** and conductivity **c** from said ratios **p** and **s**;

to determine a value of said ratio **g** by correlation of said values of liquid level **h** and conductivity **c** with the stored reference relationships; and

to determine arithmetically the flow rate from said determined value of ratio **g** and output voltage Eu or El.

The invention also provides a method of measuring flow rate of a fluid not completely filling a conduit, using an electromagnetic flowmeter comprising:

coils mounted adjacent to the upper and lower sides of the conduit for generating a magnetic field across the conduit;

a pair of electrodes arranged to sense the induced voltage across the conduit caused by the passage of the fluid through the magnetic field;

and a processing circuit including respective shunt switches connected between the output leads from the electrodes and ground;

said method comprising:

determining the ratio **p** between the output voltage Eu when the upper coil is energised and the said shunt switches are open and the output voltage El when the lower coil is energised and the said shunt switches are open;

determining the ratio s between the said output voltage Eu and the output voltage Eu' when the upper coil is energised and the said shunt switches are closed;

storing reference relationships between the ratio **g** of flow rate Q to the output voltage Eu or El and fluid level **h** and conductivity **c**;

determining values of the fluid level **h** and conductivity **c** from said ratios **p** and **s**;

determining a value of said ratio **g** by correlation of said values of liquid level **h** and conductivity **c** with the stored reference relationships; and

determining arithmetically the flow rate from said determined value of ratio **g** and output voltage Eu or El.

The following features are advantageously present:

(a) An excitation timing circuit 26 is provided which supplies excitation timing to an excitation circuit 25 and supplies the timing to an amplification circuit (AMP).

(b) A conductivity measurement timing circuit 28 is provided which generates a timing signal for controlling the switch means ($S_2$) and simultaneously supplies this timing to the arithmetic processing means 31.

(c) An excitation circuit 25 is provided which receives a signal from the excitation timing circuit 26 for thereby exciting the pair of excitation coils (Cu) (Cl).

(d) A preamplifier 27 is provided for amplifying a signal voltage appearing between the electrodes 22.

(e) An A/D conversion circuit 30 is provided for performing A/D conversion of the output of the amplification circuit (AMP), and the arithmetic processing circuit 31 is arranged to process data supplied from the A/D conversion circuit 30.

The arithmetic processing means 31 may be so configured as to produce a conductivity output.

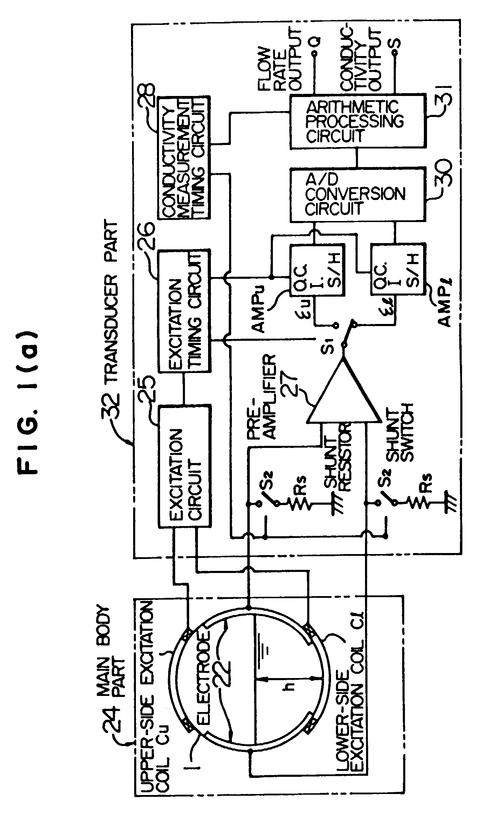

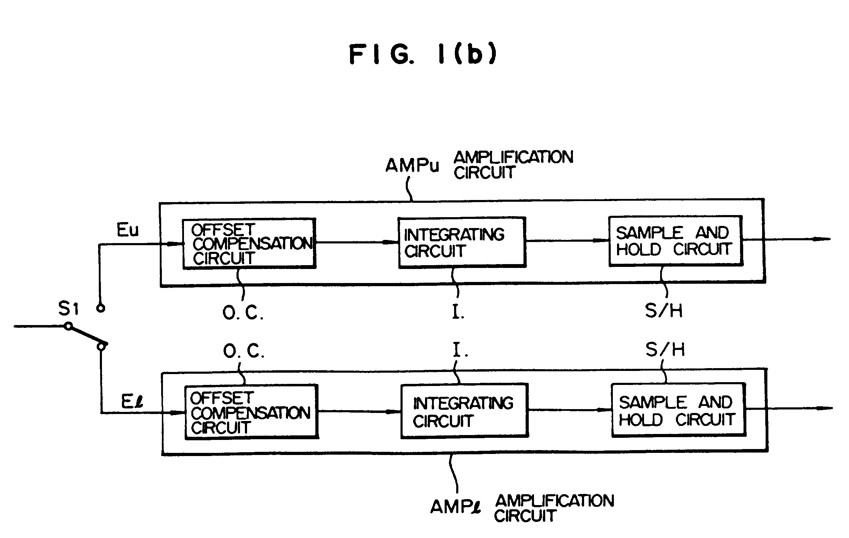

Operation will be described by reference to Figure 1 to Figure 5.

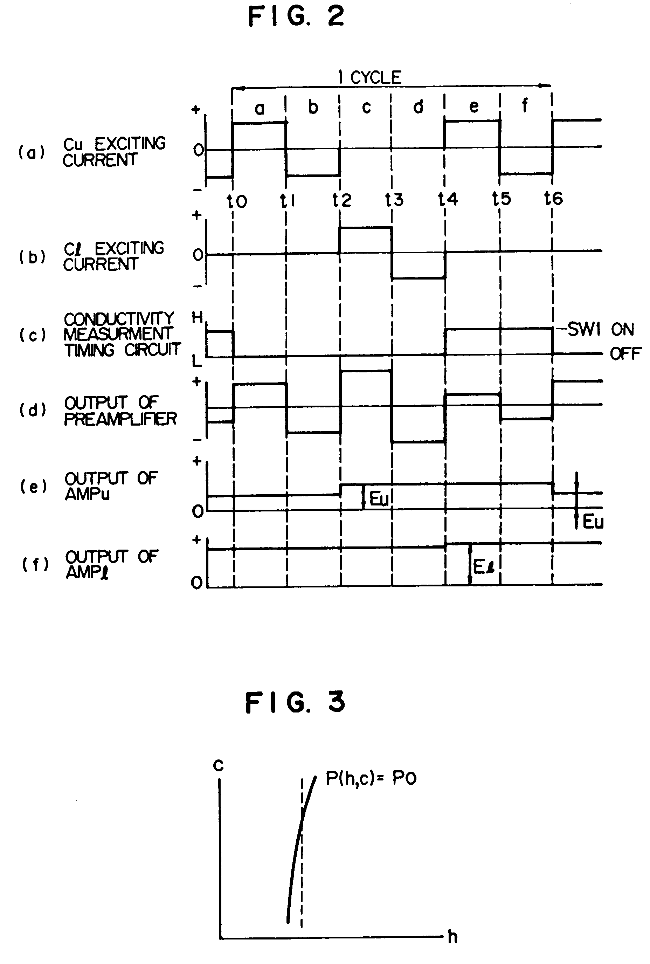

Figure 2 shows a timing chart for one typical cycle of measurement. One measurement cycle illustrated consists of periods a to f. In the first place, description will briefly be made of individual signals.

(i) The upper-side excitation coil Cu is excited during the periods a and b and the periods e and f.

(ii) The lower-side excitation coil Cl is excited during the periods c and d.

(iii) The shunt switch $S_2$ used for measurement of the conductivity is turned on or closed only during the periods e and f.

(iv) Output signals making appearance at the output of the preamplifier 27 depend on difference of the excitation and the positions of the shunt switch $S_2$.

(v) The first amplification circuit AMPu integrates the output of the preamplifier 27 during the period of excitation of the upper-side excitation coil and holds the integrated value for the output upon completion of the integration. Accordingly, the integrated value during the periods a and b is validated at a time point $t_2$, while the integrated value during the periods e and f is validated at a time point $t_6$.

Next, description will turn to procedures for processing the signals as obtained.

1. Three types of data mentioned below are previously acquired by measurement and stored in the arithmetic processing part 31.

①A ratio g ≡ Q/Eu where Eu represents the output of the first amplification circuit AMPu produced when the upper-side coil (or alternatively the lower-side coil) is excited and Q represents an actual flow rate at that time can assume a constant value by determining previously the fluid level h and the conductivity c. This ratio given by g(h, c) is previously acquired.

②A ratio p ≡ El/Eu between the output Eu produced by the first amplification circuit AMPu when the upper-side coil is excited and the output El produced by the second amplification circuit AMPl when the lower-side coil is excited can also assume a constant value for the predetermined values of the fluid level h and the conductivity c. This ratio given by p (h, c) is previously acquired by measurement.

③A ratio s ≡ Eu'/Eu between the output Eu when the shunt switch $S_2$ is opened and the output Eu' when the shunt switch $S_2$ is closed in the state where the upper-side coil is excited is also determined in dependence on the fluid level h and the conductivity c. This ratio given by s(h, c) is previously determined by measurement.

2. From the signals Eu and El obtained by actual measurement, a ratio $p_0$ = El/Eu is determined. On the premise that p(h, c) = $p_0$, a curve can be plotted on a h-c plane in a manner as illustrated in Figure 3. Although this curve intrinsically lies on a plane p = $P_0$, a curve obtained through orthogonal projection of this curve onto the h-c plane is used.

The measuring method mentioned in conjunction with the description of the background techniques is based on the presumption that $p_0$ and the fluid level h bear a one-to-one correspondence relation to each other. In other words, it was regarded that $p_0$ could be rep-

resented by a straight line extending in parallel with the ordinate, as indicated by a broken line in Figure 3. However, the inventors of the present application has discovered that $p_0$ is not in the one-to-one correspondence relation with the fluid level h, as indicated by a solid line in Figure 3, but depends on the conductivity as well, which has provided a cause for errors in the measurement. On the basis of this fact, the inventors intend to solve a problem found newly.

Namely, it is impossible to accurately determine the fluid level only on the basis of the output Eu and El of the upper-side coil and the lower-side coil.

3. Under the circumstances, the inventors of the present application have studied and examined the possibility of processing the output of the upper-side coil and/or the lower-side coil in some way so that the result of the processing can be plotted as a curve on the h-c plane, as in the case of the graph shown in Figure 3. If such curve can be obtained, it is then possible to specify the fluid level $\underline{h}$ and the conductivity $\underline{c}$ on the basis of the outputs of the upper and lower coils by determining the intersection of the above-mentioned curve with that of Figure 3. To say in another way, when two equations having two variables $\underline{h}$ and $\underline{c}$ can be defined, then the fluid level $\underline{h}$ can be determined as a solution of the equations. At the same time, the conductivity $\underline{c}$ can be determined as well.

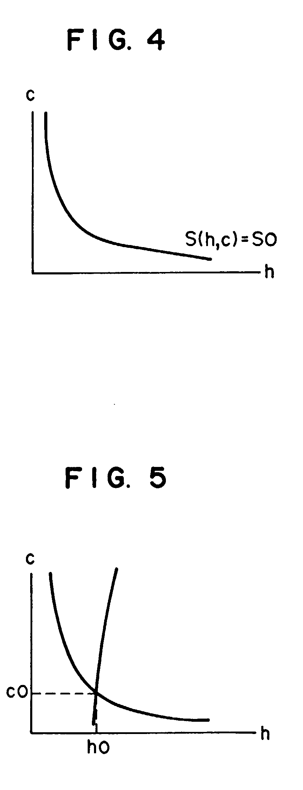

In this conjunction, the inventors of the present application paid attention to the ratio $s \equiv Eu'/Eu$ mentioned previously. By determining $S_0 = Eu'/Eu$ and representing $s_0$ by $s(u, c)$, one curve could be obtained, as shown in Figure 4, by resorting to orthogonal projection to the h-c plane as described previously.

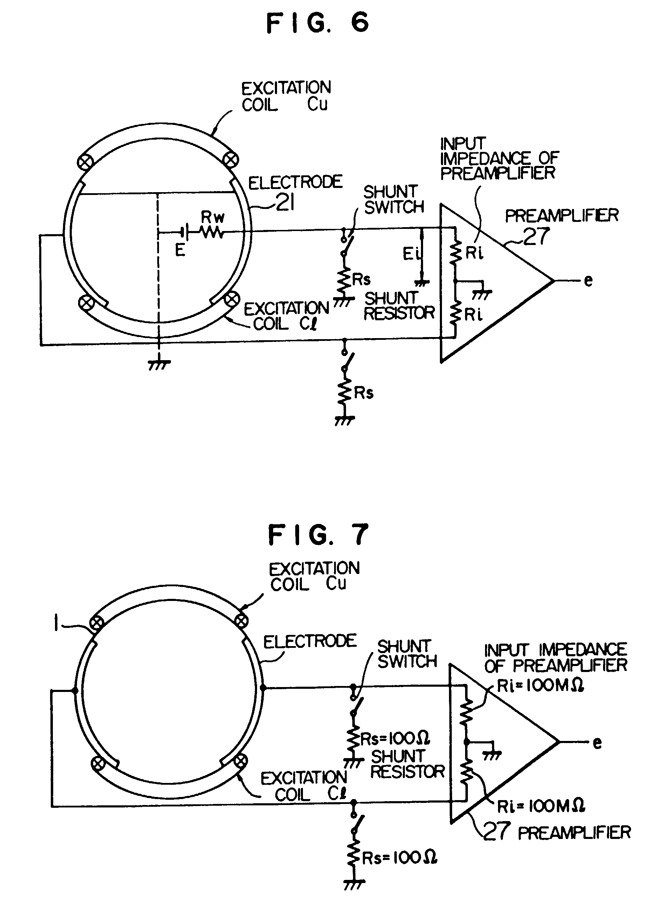

Parenthetically, when the output impedance of the flowmeter main body part 24 which is determined in dependence on the fluid level $\underline{h}$ within the flow pipe 1 and the conductivity $\underline{c}$ of the fluid to be measured is represented by Rw, the flow rate signal E generated by the flowmeter undergoes a voltage division due to pressure of an output impedance Rw and an input impedance Ri of the preamplifier 27, as shown in Figure 6. However, since it usually holds true that Rw << Ri, it is safe to say that Ei ≒ E.

When the shunt switch $S_2$ is closed,

$$Ei \fallingdotseq Rs \cdot E / (Rw + Rs)$$

so long as the condition that Rs << Ri is satisfied. Accordingly, from the previously mentioned definition of $\underline{s}$,

$$s = Rs / (Rw + Rs)$$

Since Rs is known, expression s(h, c) can apply validly in view of Rw(h, c).

4. As described hereinbefore in conjunction with the background techniques, the actual flow rate was determined on the premise that the fluid level $\underline{h}$ and the flow rate Q are in a one-to-one correspondence and that $p_0$ = El/Eu (= OB/OA) bears a one-to-one correspondence to the flow rate Q (and hence the fluid level $\underline{h}$). However, since $P_0 = p(h, c)$ as elucidated above, the method described in conjunction with the background techniques can no longer be adopted when measurement is to be carried out with higher accuracy.

Such being the circumstances, the attention of the inventors of the present application has turned to the fact that the ratio $g \equiv Q/Eu$ mentioned previously is a function of the fluid level $\underline{h}$ and the conductivity $\underline{c}$.

More specifically, since the intersection between the two curves shown in Figures 3 and 4 represents a fluid level $h_0$ and a conductivity $c_0$ in the current state (Figure 5), $g_0$ can be determined from $g = g_0(h_0, c_0)$. By the definition of $\underline{g}$, the current flow rate $Q_0$ is determined in accordance with $Q_0 = g_0Eu$.

With the procedure according to the invention, it is contemplated to determine the parameters $\underline{h}$ and $\underline{c}$ which have influence to $\underline{g}$ by solving simultaneous equations:

$$s(h, c) = s_0$$

$$p(h, c) = p_0$$

By determining the conductivity C, errors brought about by changes in the conductivity can be compensated for.

BRIEF DESCRIPTION OF THE DRAWINGS

Figure 1(a) is a block diagram showing an apparatus according to the invention and Figure 1(b) is a view showing a part of the same in detail.

Figure 2 is a timing chart.

Figure 3 is a view showing a curve $\underline{p}$ on a (h-c) plane.

Figure 4 is a view showing a curve $\underline{s}$ on the (h-c) plane.

Figure 5 is a view showing the curve $\underline{p}$ and the curve $\underline{s}$ on the (h-c) plane.

Figure 6 shows a major portion of an electric circuit according to the present invention.

Figure 7 shows an electric circuit of a major portion of an embodiment of the present invention.

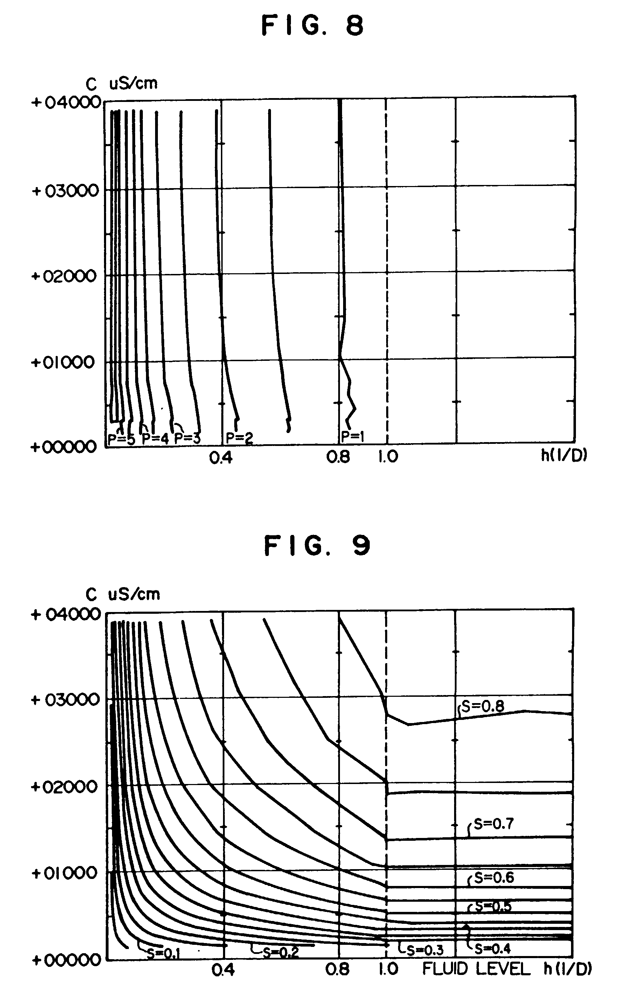

Figure 8 is a view showing a curve $\underline{p}$ on a (h-c) plane according to an embodiment of the invention.

Figure 9 is a view showing a curve $\underline{s}$ on a (h-c) plane according to an embodiment of the invention.

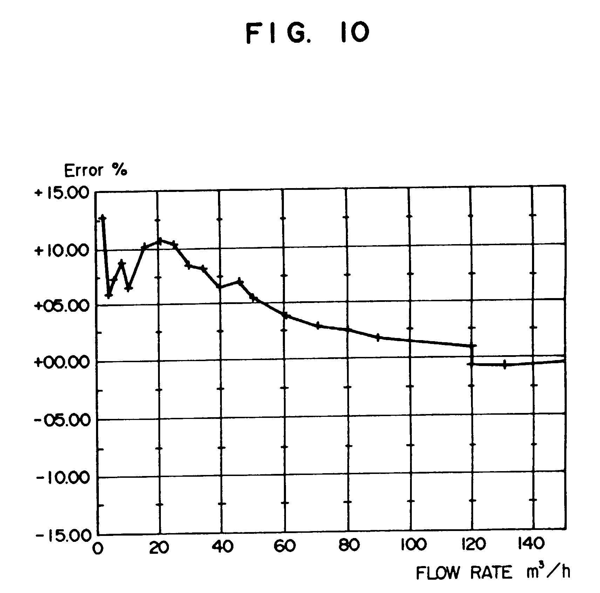

Figure 10 shows an instrumentation-attributable error curve in an exemplary one of the prior art techniques.

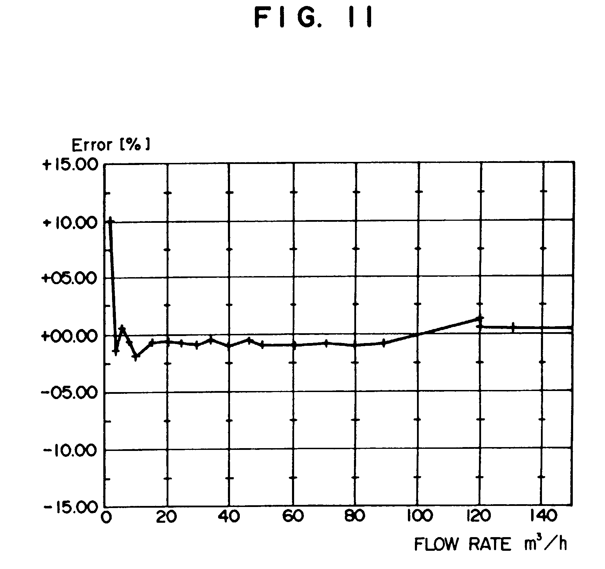

Figure 11 shows an instrumentation-attributable error curve in an embodiment of the invention.

Figure 12 is a block diagram showing an electromagnetic flowmeter previously proposed by the present applicants.

Figure 13(a) shows a previously proposed flow rate detector in a front side view and Figure 13(b) shows the same in a sectional view taken along a line A-A in Figure 13(a).

Figure 14 is a timing chart for illustrating operation of the electromagnetic flowmeter shown in Figure 12.

Figure 15(a) to Figure 15(d) are views for graphically illustrating procedures for carrying out a previously proposed flow rate measuring method, wherein Figure 15(a) graphically shows a flowmeter output, Figure 15 (b) graphically shows a flowmeter output ratio, Figure 15(c) is a view for illustrating a procedure for determining a flow rate $Q\alpha$ at a same fluid level on the basis of an output ratio obtained from an unknown flow rate, and Figure 15(d) is a view for illustrating a procedure for determining sensitivity from the output curve OA.

Figure 16 is a schematic view showing an experimental apparatus used in verification of the measurement accuracy of an hitherto known technique.

Figure 17 is a view graphically showing, by way of example, relations between an actual flow rate Q and outputs OA and OB of a previously proposed flow rate detector.

Figure 18 is a view graphically showing a relation between an actual flow rate Q and a ratio OB/OA arithmetically determined from the data shown in Figure 17.

Figure 19 is a graphical view corresponding to Figure 17 in a case where the slope of a flow pipe is different.

Figure 20 is an instrumentation-attributable error characteristic diagram of an apparatus known heretofore.

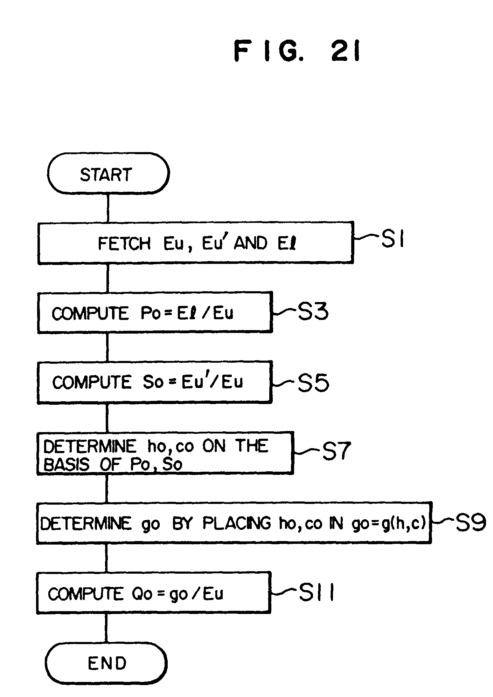

Figure 21 is a flow chart for illustrating a method according to an embodiment of the present invention.

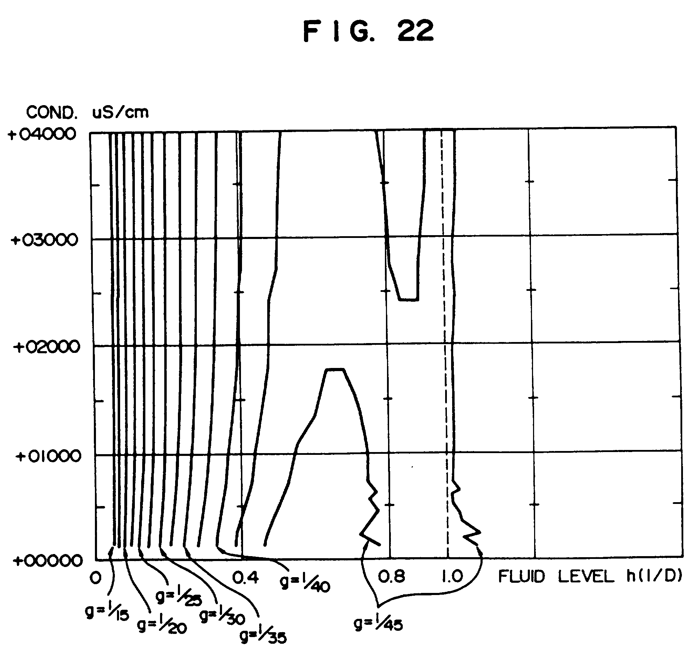

Figure 22 is a view for graphically illustrating relations between $\underline{g}$, $\underline{h}$ and $\underline{c}$.

Referring to Figure 7 and assuming that the inner diameter of a flow line or conduit 1 is 200, a shunt resistor Rs is 100 $\Omega$, and that a preamplifier 27 has an input impedance of 100 M$\Omega$, curves corresponding to those shown in Figures 3 and 4 can be plotted as shown in Figures 8 and 9.

In Figure 9, a region where the fluid level $\underline{h}$ is higher than 1.0 D represents the case in which the fluid is transported under pressure in the filled state of the pipe. This region is plotted only for the purpose of reference.

In Figure 11, data resulting from the measurement of a flow rate of a fluid having a conductivity of 1300 $\mu$S/ cm according to the teaching of the present invention are illustrated, wherein the actual flow rate is taken along the abscissa while taken along the ordinate are instrumentation-attributable errors (i.e., error = (measured value - true value) / true value $\times$ 100 %)).

Data shown in Figure 10 are obtained as a result of measurement of the same fluid in accordance with the method described hereinbefore in conjunction with the background techniques.

Because the electromagnetic flowmeter for an unfilled fluid flow conduit according to the present invention is implemented in the structure described above, adverse influence of change in the conductivity on the measurement accuracy can be corrected or compensated for, whereby measurement error can be minimized.

Further, because requirement imposed on the symmetricalness of the main body portion can be mitigated, freedom in designing the main body portion of the electromagnetic flowmeter is increased.

Besides, by outputting externally the information of the conductivity, the function of a conductivity measuring apparatus can be realized as well.

Next, a measurement method according to an embodiment of the present invention will be described with the aid of a flow chart shown in Figure 21.

By the way, Figure 22 is a view for graphically illustrating relations between the ratio $g \equiv Q/Eu$ and the fluid level $\underline{h}$ and the conductivity $\underline{c}$. The relations shown in Figure 22 as well as the relations shown in Figures 8 and 9 are previously stored in a memory incorporated in the arithmetic processing part 31.

In a step S1, the output Eu of the upper-side coil obtained when the shunt switch $S_2$ is opened, the output Eu' of the same coil when the switch $S_2$ is closed and the output El of the lower-side coil are detected and stored in registers incorporated in the arithmetic processing part 31.

In a step S3, an arithmetic circuit of the arithmetic processing part fetches Eu and El from the respective registers to perform calculation in accordance with $p_0 = El/Eu$, the result of which is stored in another register.

In a step S5, computation is similarly performed in accordance with $S_0 = El'/Eu$, the result of which is stored in another register.

In a step S7, the value of $p_0$ obtained in step S3 is compared with the data shown in Figure 8 and stored in the memory, to thereby select one of the data shown in Figure 8 which is closest to $p_0$. On the other hand, the value of $S_0$ obtained in step S5 is compared with the data of Figure 9 stored in the memory, to select one of the data which is closest to $S_0$. On the basis of the intersection between the two data derived in this way, the fluid level $h_0$ and the conductivity $c_0$ at the time of measurement can be determined.

In a step S9, data of Figure 22 stored in the memory are consulted to specify $g_0$ from the fluid level $h_0$ and the conductivity $c_0$ determined in the step 7.

In a step S11, the output Eu of the upper-side coil is read out from the register and is multiplied by the ratio $g_0$ obtained in step S9 to thereby determine arithmetically the actual flow rate $Q_0$.

Incidentally, in the case of the embodiment described above, the inner diameter of the pipe is 240 mm. Each of the electrodes 2 has a width of 40 mm in the flow direction and a thickness of 2 mm. Both electrodes are disposed with an intervening angle of 90°.

Configurations and dimensions of the upper-side and lower-side coils are shown in Figure 14.

It should be added that the coils as used are each composed of a winding of 1300 turns.

## Claims

1. An electromagnetic flowmeter for measuring flow rate of a fluid not completely filling a conduit, comprising:

coils (Cu,Cl) mounted adjacent to the upper and lower sides of the conduit (1) for generating a magnetic field across the conduit;
a pair of electrodes (22) arranged to sense the induced voltage across the conduit caused by passage of the fluid through the magnetic field;
and a processing circuit (32) including respective shunt switches ($S_2$) connected between the output leads from the electrodes and ground;
said processing circuit also comprising:
means arranged to determine the ratio p between the output voltage Eu when the upper coil (Cu) is energised and the said shunt switches ($S_2$) are open and the output voltage El when the lower coil (Cl) is energised and the said shunt switches ($S_2$) are open;
to determine the ratio s between said output voltage Eu and the output voltage Eu' when the upper coil (Cu) is energised and the said shunt switches ($S_2$) are closed,
to store reference relationships between the ratio g of flow rate Q to the output voltage Eu or El and fluid level h and conductivity c;
to determine values of fluid level h and conductivity c from said ratios p and s,
to determine a value of said ratio g by correlation of said values of liquid level h and conductivity c with the stored reference relationships; and
to determine arithmetically the flow rate from said determined value of ratio g and output voltage Eu or El.

2. An electromagnetic flowmeter according to claim 1, comprising: amplifier means (27) connected to said sensor means (22) for amplifying the output signal of said sensor means; wherein said switch means ($S_2$) is connected to the output of said sensor means and the input of said amplifier means.

3. An electromagnetic flowmeter according to any one of claims 1 and 2, comprising: means (S) for outputting a signal representing electrical conductivity.

4. A method of measuring flow rate of a fluid not completely filling a conduit, using an electromagnetic flowmeter comprising:

coils (Cu,Cl) mounted adjacent to the upper and lower sides of the conduit (1) for generating a magnetic field across the conduit;
a pair of electrodes (22) arranged to sense the induced voltage across the conduit caused by the passage of the fluid through the magnetic field;
and a processing circuit (32) including respective shunt switches ($S_2$) connected between the output leads from the electrodes (22) and ground;
said method comprising:
determining the ratio **p** between the output voltage Eu when the upper coil (Cu) is energised and the said shunt switches ($S_2$) are open and the output voltage El when the lower coil (Cl) is energised and the said shunt switches ($S_2$) are open;
determining the ratio s between the said output voltage Eu and the output voltage Eu' when the upper coil (Cu) is energised and the said shunt switches ($S_2$) are closed;
storing reference relationships between the ratio **g** of flow rate Q to the output voltage Eu or E1 and fluid level **h** and conductivity **c**;
determining values of the fluid level **h** and conductivity **c** from said ratios **p** and **s**;
determining a value of said ratio **g** by correlation of said values of liquid level **h** and conductivity **c** with the stored reference relationships; and
determining arithmetically the flow rate from said determined value of ratio **g** and output voltage Eu or El.

## Patentansprüche

1. Elektromagnetischer Strömungsmesser zum Messen der Strömungsrate eines eine Leitung nicht vollständig füllenden Fluids, umfassend:

Spulen (Cu, Cl), die benachbart der oberen und unteren Seite der Leitung (1) zum Erzeugen eines Magnetfelds quer zu der Leitung angebracht sind;
ein Paar Elektroden (22), die zum Abfühlen der quer zu der Leitung induzierten Spannung, welche durch Durchgang des Fluids durch das Magnetfeld bewirkt wird, angeordnet sind;
und eine Verarbeitungsschaltung (32), die jeweilige Nebenschlußschalter ($S_2$) aufweist, welche zwischen die Ausgangsleitungen von den Elektroden und Masse geschaltet sind; wobei die Verarbeitungsschaltung außerdem folgendes umfaßt:
Mittel, die eingerichtet sind zum Bestimmen des Verhältnisses p zwischen der Ausgangsspannung Eu, wenn die obere Spule (Cu) erregt und die Nebenschlußschalter (S₂) offen sind, und der Ausgangsspannung El, wenn die untere Spule (Cl) erregt und die Nebenschlußschalter (S₂) offen sind;

zum Bestimmen des Verhältnisses s zwischen der Ausgangsspannung Eu und der Ausgangsspannung Eu', wenn die obere Spule (Cu) erregt und die Nebenschlußschalter (S₂) geschlossen sind, zum Speichern von Bezugsbeziehungen zwischen dem Verhältnis g der Strömungsrate Q zu der Ausgangsspannung Eu oder El und dem Fluidniveau h und der Leitfähigkeit c;

zum Bestimmen von Werten des Fluidniveaus h und der Leitfähigkeit c aus den Verhältnissen p und s,

zum Bestimmen eines Werts des Verhältnisses g durch Korrelation der Werte des Flüssigkeitsniveaus h und der Leitfähigkeit c mit den gespeicherten Bezugsbeziehungen; und

zum arithmetischen Bestimmen der Strömungsrate aus dem bestimmten Wert des Verhältnisses g und der Ausgangsspannung Eu oder El.

2. Elektromagnetischer Strömungsmesser gemäß Anspruch 1, umfassend: ein Verstärkermittel (27), das mit dem Sensormittel (22) zum Verstärken des Ausgangssignals des Sensormittels verbunden ist; worin das Schaltermittel (S₂) mit dem Ausgang des Sensormittels und dem Eingang des Verstärkermittels verbunden ist.

3. Elektromagnetischer Strömungsmesser gemäß irgendeinem der Ansprüche 1 und 2, umfassend: ein Mittel (S) zum Ausgeben eines Signals, das die elektrische Leitfähigkeit repräsentiert.

4. Verfahren des Messens der Strömungsrate eines eine Leitung nicht vollständig füllenden Fluids unter Verwendung eines elektromagnetischen Strömungsmessers, umfassend:

Spulen (Cu, Cl), die benachbart der oberen und unteren Seite der Leitung (1) zum Erzeugen eines Magnetfelds quer zu der Leitung angebracht sind;

ein Paar Elektroden (22), die zum Abfühlen der quer zu der Leitung induzierten Spannung, welche durch den Durchgang des Fluids durch das Magnetfeld bewirkt worden ist, angeordnet sind;

und eine Verarbeitungsschaltung (32), die jeweilige Nebenschlußschalter (S₂) aufweist, welche zwischen die Ausgangsleitungen von den Elektroden (22) und Masse geschaltet sind; wobei das Verfahren folgendes umfaßt:

Bestimmen des Verhältnisses p zwischen der Ausgangsspannung EU, wenn die obere Spule (Cu) erregt und die Nebenschlußschalter (S₂) offen sind, und der Ausgangsspannung El, wenn die untere Spule (Cl) erregt und die Nebenschlußschalter (S₂) offen sind;

Bestimmen des Verhältnisses s zwischen der Ausgangsspannung Eu und der Ausgangsspannung Eu', wenn die obere Spule (Cu) erregt und die Nebenschlußschalter (S₂) geschlossen sind;

Speichern von Bezugsbeziehungen zwischen dem Verhältnis g der Strömungsrate Q zu der Ausgangsspannung Eu oder El und dem Fluidniveau h und der Leitfähigkeit c;

Bestimmen von Werten des Fluidniveaus h und der Leitfähigkeit c aus den Verhältnissen p und s;

Bestimmen eines Werts des Verhältnisses g durch Korrelation der Werte des Flüssigkeitsniveaus h und der Leitfähigkeit c mit den gespeicherten Bezugsbeziehungen; und

arithmetisches Bestimmen der Strömungsrate aus dem bestimmten Wert des Verhältnisses g und der Ausgangsspannung Eu oder El.

## Revendications

1. Débitmètre électromagnétique pour mesurer le débit d'un fluide ne remplissant pas complètement un conduit, comprenant :

des bobines (Cu, Cl) montées au voisinage des parois supérieure et inférieure du conduit (1) pour créer un champ magnétique à travers le conduit ;

une paire d'électrodes (22) disposées pour détecter la tension induite à travers le conduit à cause du passage du fluide à travers le champ magnétique ;

et un circuit de traitement (32) incluant des commutateurs de dérivation (S₂) respectifs, connectés entre les fils de sortie provenant des électrodes et la terre ; ledit circuit de traitement comprenant également :

des moyens disposés pour déterminer le quotient p entre la tension de sortie Eu lorsque la bobine supérieure (Cu) est parcourue par le courant et que lesdits commutateurs de dérivation (S₂) sont ouverts et la tension de sortie El lorsque la bobine inférieure (Cl) est parcourue par le courant et que lesdits commutateurs de dérivation (S₂) sont ouverts,

pour déterminer le quotient s entre ladite tension de sortie Eu et la tension de sortie Eu' lorsque la bobine supérieure (Cu) est parcourue par le courant et que lesdits commutateurs de

dérivation ($S_2$) sont fermés,

pour mettre en mémoire les relations de référence entre le quotient g, du débit Q sur la tension de sortie Eu ou El, et le niveau du fluide h et la conductivité c ;

pour déterminer des valeurs du niveau de fluide h et de la conductivité c à partir desdits quotients p et s,

pour déterminer une valeur dudit quotient g par corrélation desdites valeurs du niveau de liquide h et de la conductivité c avec les relations de référence mises en mémoire ; et

pour déterminer de façon arithmétique le débit à partir de ladite valeur déterminée du quotient g et de la tension de sortie Eu ou El.

2. Débitmètre électromagnétique selon la revendication 1, comprenant : un moyen d'amplification (27) connecté audit moyen de détection (22) pour amplifier le signal de sortie dudit moyen de détection ; dans lequel ledit moyen de commutateur ($S_2$) est connecté à la sortie dudit moyen de détection et à l'entrée dudit moyen d'amplification.

3. Débitmètre électromagnétique selon l'une quelconque des revendications 1 et 2, comprenant des moyens pour délivrer un signal représentant la conductivité électrique.

4. Procédé de mesure du débit d'un fluide ne remplissant pas complètement un conduit, utilisant un débitmètre électromagnétique comprenant :

des bobines (Cu, Cl) montées au voisinage des parois supérieure et inférieure du conduit (1) pour créer un champ magnétique à travers le conduit ;

une paire d'électrodes (22) disposées pour détecter la tension induite à travers le conduit à cause du passage du fluide à travers le champ magnétique ;

et un circuit de traitement (32) incluant des commutateurs de dérivation ($S_2$) respectifs, connectés entre les fils de sortie provenant des électrodes (22) et la terre ;

ledit procédé comprenant :

la détermination du quotient p entre la tension de sortie Eu lorsque la bobine supérieure (Cu) est parcourue par le courant et que lesdits commutateurs de dérivation ($S_2$) sont ouverts et la tension de sortie El lorsque la bobine inférieure (Cl) est parcourue par le courant et que lesdits commutateurs de dérivation ($S_2$) sont ouverts, la détermination du quotient s entre ladite tension de sortie Eu et la tension de sortie Eu' lorsque la bobine supérieure (Cu) est parcourue par le courant et que lesdits commutateurs de dérivation ($S_2$) sont fermés,

la mise en mémoire des relations de référence entre le quotient g, du débit Q sur la tension de sortie Eu ou El, et le niveau du fluide h et la conductivité c ;

la détermination des valeurs du niveau de fluide h et de la conductivité c à partir desdits quotients p et s,

la détermination d'une valeur dudit quotient g par corrélation desdites valeurs du niveau de liquide h et de la conductivité c avec les relations de référence mises en mémoire ; et

la détermination de façon arithmétique du débit, à partir de ladite valeur déterminée du quotient g et de la tension de sortie Eu ou El.

# FIG. 1(a)

**24 MAIN BODY PART**

UPPER-SIDE EXCITATION COIL Cu

ELECTRODE 22

I

h

LOWER-SIDE EXCITATION COIL Cl

**32 TRANSDUCER PART**

**25** EXCITATION CIRCUIT

**26** EXCITATION TIMING CIRCUIT

**28** CONDUCTIVITY MEASUREMENT TIMING CIRCUIT

S2
Rs
SHUNT RESISTOR

PRE-AMPLIFIER 27

AMPu

$\varepsilon_u$ Q.C. I. S/H

S1

S2
Rs
SHUNT SWITCH

$\varepsilon_l$ Q.C. I S/H

AMPl

A/D CONVERSION CIRCUIT 30

ARITHMETIC PROCESSING CIRCUIT 31

FLOW RATE OUTPUT — Q

CONDUCTIVITY OUTPUT — S

EP 0 557 529 B1

EP 0 557 529 B1

# F I G. 2

(a) Cu EXCITING CURRENT

(b) Cℓ EXCITING CURRENT

(c) CONDUCTIVITY MEASURMENT TIMING CIRCUIT

(d) OUTPUT OF PREAMPLIFIER

(e) OUTPUT OF AMPu

(f) OUTPUT OF AMPℓ

# F I G. 3

12

# FIG. 4

S(h,c)=SO

# FIG. 5

# F I G. 6

EXCITATION
COIL   Cu

ELECTRODE
21

Rw

E

EXCITATION
COIL  Cl

SHUNT
SWITCH

Rs

SHUNT
RESISTOR

Rs

INPUT
IMPEDANCE OF
PREAMPLIFIER

$E_i$

$R_i$

$R_i$

PREAMPLIFIER
27

e

# F I G. 7

EXCITATION
COIL  Cu

ELECTRODE

SHUNT
SWITCH

Rs=100Ω
SHUNT
RESISTOR

EXCITATION
COIL  Cl

Rs=100Ω

INPUT IMPEDANCE
OF PREAMPLIFIER
$R_i$=100MΩ

$R_i$=100MΩ

27 PREAMPLIFIER

e

# F I G. 8

# F I G. 9

# F I G. 10

# F I G. II

FIG. 12

# FIG. 13(a)

# FIG. 13(b)

# F I G. 14

| | |
|---|---|
| TIMING CIRCUIT | H / L |
| EXCITING CURRENT 3A | O |
| EXCITING CURRENT 3B | O |
| CHANGE-OVER SWITCH | POSITION a / POSITION b |
| OUTPUT OF PREAMPLIFIER 7 | O |
| INPUT TO AMPa | O |
| INPUT TO AMPb | O |

EP 0 557 529 B1

FIG. 15(a)

OUTPUT

OA
OB

FLOW RATE
Q(m³/h)

FIG. 15(b)

OB/OA

FLOW RATE
Q(m³/h)

FIG. 15(c)

OB/OA

$\frac{OB}{OA} = \alpha$

FLOW RATE
Q(m³/h)

Q$\alpha$

FIG. 15(d)

OUTPUT

OA

OA$\alpha$

k

FLOW RATE
Q(m³/h)

Q$\alpha$

21

FIG. 16

BUFFER TANK

FLOW REGULATING VALVE

MASTER METER

PUMP

FROM PIT

TO PIT

4

13

EP 0 557 529 B1

# F I G. 17

# F I G. 18

# F I G. 19

# F I G. 20

# F I G. 21

```
           ┌─────────────┐
           │    START    │
           └──────┬──────┘
                  │
    ┌─────────────┴──────────────┐
    │   FETCH  Eu, Eu' AND El     ├── S1
    └─────────────┬──────────────┘
                  │
    ┌─────────────┴──────┐
    │ COMPUTE Po = El /Eu ├── S3
    └─────────────┬──────┘
                  │
    ┌─────────────┴──────┐
    │ COMPUTE So = Eu'/Eu ├── S5
    └─────────────┬──────┘
                  │
    ┌─────────────┴────────────┐
    │ DETERMINE ho,co ON THE    ├── S7
    │ BASIS OF Po, So           │
    └─────────────┬────────────┘
                  │
 ┌────────────────┴─────────────────────────┐
 │ DETERMINE go BY PLACING ho,co IN go=g(h,c)├── S9
 └────────────────┬─────────────────────────┘
                  │
    ┌─────────────┴──────┐
    │ COMPUTE Qo = go /Eu ├── S11
    └─────────────┬──────┘
                  │
           ┌──────┴──────┐
           │     END     │
           └─────────────┘
```

# F I G. 22